# EUROPEAN PATENT APPLICATION

(11) **EP 0 559 272 A1**
(43) Date of publication of application: **08.09.1993**
(21) Application number: 93200531.7
(22) Date of filing: 25.02.1993
(51) Int. Cl.: C05F 3/00, C05C 5/04

(54) **Process for reducing H2S and other odour compounds from manure**

(30) Priority: 05.03.1992 NO 920866
(71) Applicant: NORSK HYDRO a.s., N-0257 Oslo 2 (NO)
(72) Inventor: Kongshaug, Gunnar, W-3700 Skien (NO); Hoyvik, Henrik, N-3721 Skien (NO); Eskilt, Jan Petter, N-3945 Eidanger (NO)
(74) Representative: Bleukx, L.L.M.

(57) **Abstract**

The invention relates to a special method for addition of a nitrate salt to manure as an effective way of controlling hydrogen sulphide emission and emission of other odour compounds from manure. The method comprises addition of nitrate in an amount of 1 - 8 kg nitrate/m³ manure, at least once, the latest addition being within 5 days before spreading of the manure. A preferred feature of the invention is that the nitrate salt is added to the manure in the form of solid particulated calcium nitrate or aqueous solution thereof. There is also disclosed a method of controlling the nitrate addition. Said addition can be regulated by measuring the NO₃⁻ concentration in the manure, preferably by means of indicator paper.

## Description

This invention relates to a process for reducing hydrogen sulphide and other odour compounds from manure by addition of a nitrate salt.

Due to high concentration of sulphide and other odour components in manure, bad smell from manure is considered as a local environmental problem.

H₂S is a very toxic gas, and even in small amounts it can be fatal for both animals and human beings. In farming this causes problems, because before the manure is spread on the field, it has to be stirred in the manure bin to enable pumping into the spreading vehicle in desired consistency and composition. During the stirring period of the manure, H₂S in a relatively high concentration will evolve and this will be dangerous both for the farmer and the livestock. Actually animals die every year because of this.

So far, no economical solution to this problem has been found.

The applicants field experiments at the Sture oil terminal and Walbutt (UK) have shown that biological oxidation of sulphide by the addition of calcium nitrate is an effective method to control sulphide emission from industrial and domestic effluent.

U.S. Department of Commerce, National Technical Information Service, PB-281 379, Apr. 78, p. 39-41, Robert S. Kerr Environmental Research Lab, Ada, Okla has reported that sodium nitrate was found to change the odour, reduce sulphide levels, and cause suspended solids to float for both swine and dairy manure. It is here also reported that potassium nitrate has some effect in reducing odours on beef cattle feedlot manure.

In US-patent nr. 4.155.975 anaerobic livestock manure is deodorized by topically applying onto the manure an aqueous deodorizing-mixture of an iodous-ingredient including therein elemental iodine and potassium iodide, alkaline hypochlorite oxidizing agent for said iodous-ingredient, and ammonium nitrate. This reaction is not a biological reaction, but a chemical oxidation reaction where the microorganisms in the manure probably is killed. The addition of ammonium nitrate is necessary to make the oxidation process take place in manure where urine is removed. The reagents used in this process are besides being more expensive also more complicated to add to the manure than the nitrate added in accordance with the present invention. The former is further resulting in emission of environmental damaging chemicals.

Substantial amounts are currently invested in wet composting of manure comprising addition of air and intensive mixing for 3 - 4 weeks prior to spreading. This procedure will during start up imply substantial risks for H₂S evolution and alternative methods are accordingly demanded.

It has now been found a special method for addition of a nitrate salt to manure as an effective way of controlling hydrogen sulphide emission and emission of other odour compounds from manure. Addition of nitrate to manure in this way will oxidize already present sulphide, prevent further production of sulphide, and keep further production of sulphide under control. Thus added nitrate causes at the same time a reduction in the concentration of other odour components than sulphide. These include p-cresole, indole, skatole and ethanoic acid.

Contrary to the experience with addition of calcium nitrate to municipal sewage, it was surprisingly found that in manure calcium nitrate would not be consumed rapidly but react over an extended period of time lasting for up to several days. Thus application of calcium nitrate to manure would be far more economic than expected. Another reason for not applying calcium nitrate to manure was initial experience with addition of nitrate in the form of nitric acid which resulted in substantial foaming. Corresponding problems with foaming was expected with application of nitrate salts due to extensive gas formation. However, addition of calcium nitrate did not cause similar foaming problems as nitric acid.

It was found that after addition of nitrate salt, it will take some time before all the sulphide is oxidized to sulphate. When the sulphide compounds are removed, this situation will last for some days, but then the sulphide content in the manure will start to increase again. It is therefor of importance that the spreading of the manure is done during the period when the sulphide content is kept at a minimum. If the farmer for some reason is not able to spread the manure in this period after the first addition of nitrate salt, he can add nitrate salt to the manure once more, and spread when the sulphide content again has reached a minimum level.

After the first addition of nitrate salt, the time required to attain the sulphide content at a minimum level is much longer than after the possible next additions of nitrate salt. The period of time when the sulphide content remains at a minimum seems to be the same regardless of when the nitrate is added. Accordingly, if the farmer does not manage spreading the manure within the first period of minimum sulphide content, he can add nitrate salt once more and just wait for a few hours, and then spread the manure having reached the desired minimum content of sulphide.

Because of the different composition of manure, it can be quite difficult to decide the exact amount of nitrate that is needed to oxidize the sulphide and other odour compounds present in the manure.

If the nitrate is added to the manure in excess, the manure that is spread on the field might contain some additional nitrate. However, as the slurry contain organic matter, the denitrification will continue for some time after spreading and consume excess nitrate. It should also be kept in mind that nitrate is a plant nutrient.

To eliminate the problem with adding insufficient amount of nitrate, this invention also concerns a method of controlling the nitrate addition. This can be done by means of an indicator paper which is put into the manure, and then when comparing the indicator paper to a colour scale it will show if there is any more nitrate left in the manure and accordingly if some more nitrate should be added. In this way the farmer can keep control of how much nitrogen in form of nitrate he is spreading on the fields, and also with regard to the odour compounds in the manure.

The nitrate salt can be supplied to the manure in solid, particulated form or as an aqueous solution. And the nitrate salt can be added to the manure either continuously or batchwise.

When deciding which nitrate salt that is most suitable to use, one should also take into consideration the properties of the cation of the salt, and the consequences application of a particular nitrate salt will have. In view of this, calcium nitrate was found to be most suitable, mainly because calcium is a mineral that represents a positive supply to the field. Further calcium is present only in small amounts in untreated manure, contrary to potassium which usually is present in more than sufficient amounts in manure.

A special advantage experienced with applying calcium nitrate was that a surprisingly rapid even distribution within the entire bulk of manure was attained. This effect might be due to a higher diffusion rate for calcium nitrate than for other nitrate salts like sodium and potassium nitrate.

There has not been found any difference in pH between manure treated with nitrate salt according to the invention and untreated manure.

Emission of N₂O from the manure during the treatment process with nitrate is hardly detectable and seem to be marginal, especially compared to inherent N₂O emission from manure.

It was further found that emission of methane from the manure that is treated with nitrate is reduced compared to untreated manure, and that the concentration of ammonium and gaseous ammonia will be approximately the same for both untreated and treated manure.

The consistency of the manure becomes more sludgy, and sludge tends to float on the top of the liquid layer when the manure is treated with nitrate salt. This is most advantageous because this consistency is more like the consistency that is needed when the manure is to be transferred into the spreading vehicle and spread on the fields. It was also found that formation of slime was reduced and thereby made the treated manure more acceptable for the animals feeding on newly fertilized fields.

The invention is characterized by adding the nitrate salt in an amount of 1 - 8 kg nitrate/m³ manure, at least once, and 1 - 5 days before spreading the manure. If desired the nitrate salt can be added several times in the amount of 1 - 8 kg nitrate/m³ manure the first and second time, and subsequently in declining amounts, and the last addition of nitrate taking place 1 hour - 5 days before spreading the manure.

A preferred feature of the invention is that the amount of nitrate needed can be regulated by measuring NO₃⁻ with an indicator-paper or other measuring means.

Another preferred feature is that the nitrate is added to the manure once in a amount of 2 - 4 kg nitrate/m³ manure , 1 - 5 days before spreading.

A further preferred feature is that the nitrate salt is added to the manure in the form of solid particulated calcium nitrate or aqueous solution thereof.

In the following the invention will be further explained by the examples and the attached figures.
Fig. 1A and 1B show the effect of an initial dose of calcium nitrate on the concentration of sulphide (A) and nitrate (B) in pig manure.
Fig. 2 shows the effect of repeated batchwise addition of calcium nitrate on the concentration of sulphide in pig manure.
Fig. 3 shows the effect of repeated batchwise addition of calcium nitrate on the redox potential in pig manure.
Fig. 4 shows oxidation of sulphide by a biological reaction involving consumption of calcium nitrate in pig manure.
Fig. 5 shows reduction in concentration of p-cresol, indole and skatole when adding calcium nitrate to pig manure.
Fig. 6 shows reduction in the concentration of ethanoic acid when adding calcium nitrate to pig manure.
Fig. 7 shows the effect of repeated batchwise addition of calcium nitrate on the concentration of sulphide and nitrate i pig manure, in an initial field experiment.

In the following laboratory experiments, pig manure was treated in a 2,0 l glass bed reactor either with mechanical stirring equipment or "loop" circulation of the manure. The reactor was continuously flushed with pure N₂ to secure anaerobic conditions, or, in some experiments, the reactors were just sealed to simplify gas analysis for N-containing compounds.

### Sulphide removal:

### Example 1

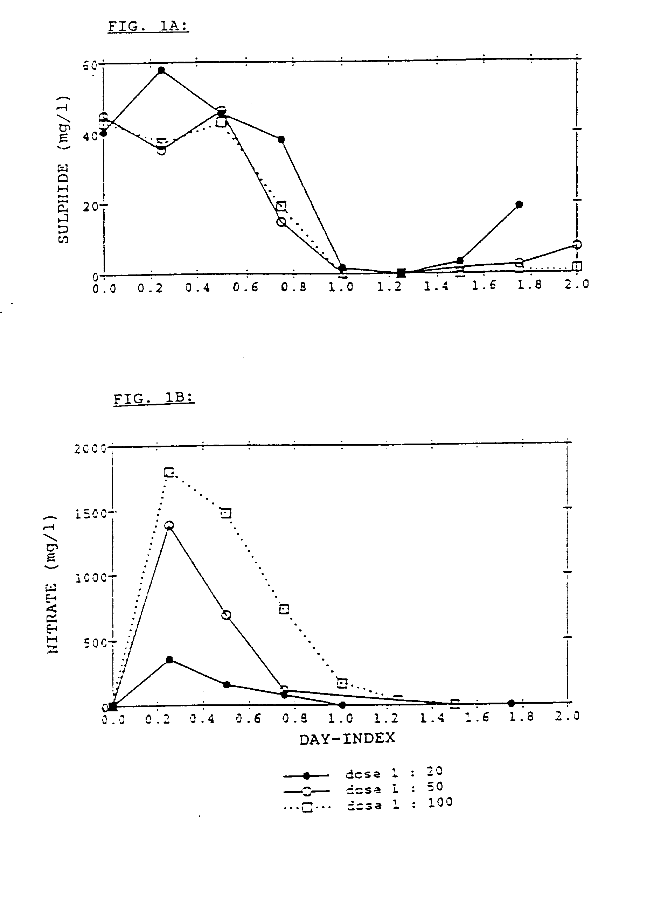

Three experiments where the manure was treated with calcium nitrate in dosage ratios H₂S : calcium nitrate of 1 : 20, 1 : 50 and 1 : 100 respectively, were performed. The calcium nitrate was added as an 45% aqueous solution. Fig. 1A and 1B show that after an initial lag phase, the nitrate was consumed rapidly and the concentration of sulphide was declining in a similar way. The total reaction time, which is the time from addition of the nitrate salt till the concentration of sulphide is approximately zero, was about 24 hours. This reaction time seems independent of the dose ratio as long as the dose ratio is between 1 H₂S : 20 calcium nitrate and 1 H₂S : 100 calcium nitrate. In order to maintain the sulphide level at a minimum, it was necessary to have an initial dose ratio of 1 H₂S : 100 calcium nitrate. The results from this example are shown in Fig. 1A and 1B.

### Example 1a

Series of experiments where calcium nitrate was continuously added to the manure, were performed. The addition of 3000 mg - 4000 mg 45% calcium nitrate/l * 24 h seemed to be sufficient to keep a low sulphide concentration.

### Example 2

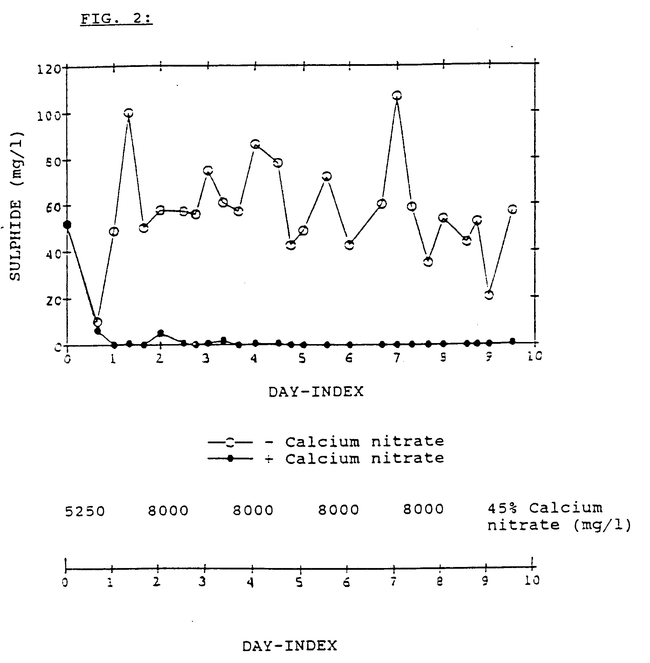

An experiment was performed with addition of 8000 mg 45% calcium nitrate/l every second day. Fig. 2 shows that this supply of calcium nitrate to the manure would keep the sulphide concentration at zero. In comparison, the sulphide concentration in untreated manure varied between 20 and 100 mg/l during the same experimental period. The results from this experiment are shown in Fig. 2.

### Example 3

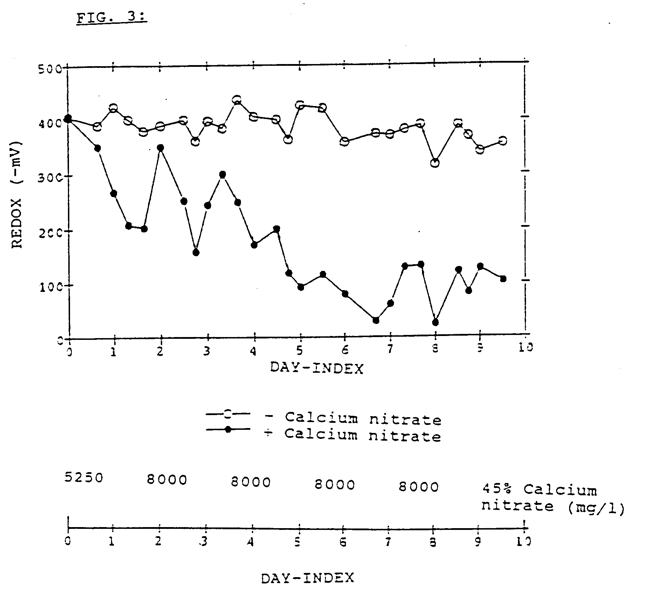

The reaction conditions in this experiment were the same as for example 2. The reduction of sulphate to sulphide was found to depend on a redox-potential below -300 mV at pH 7,0. By adding calcium nitrate to manure, which contains denitrifying bacteria, the redox-potential increased to a potential at about -150 to -200 mV and prevented thereby further production of sulphide. The results are shown in Fig. 3.

### Example 4

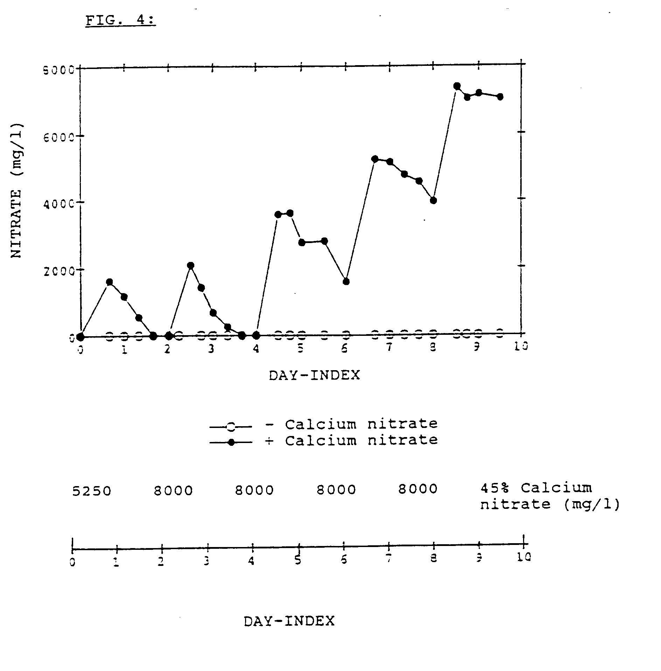

The reaction conditions in this experiment were also the same as for example 2. This example shows the bacterial effect. The nitrate added during the first 4 days was consumed by the denitrifying bacteria. This is shown in Fig. 4. However, the figure also shows that further addition with the same amount of nitrate, results in a net accumulation of nitrate.

### Removal of other odour compounds than sulphide:

### Example 5

p-Cresole, indole, skatole and volatile fatty acids are some of the main components causing smell from pig manure.

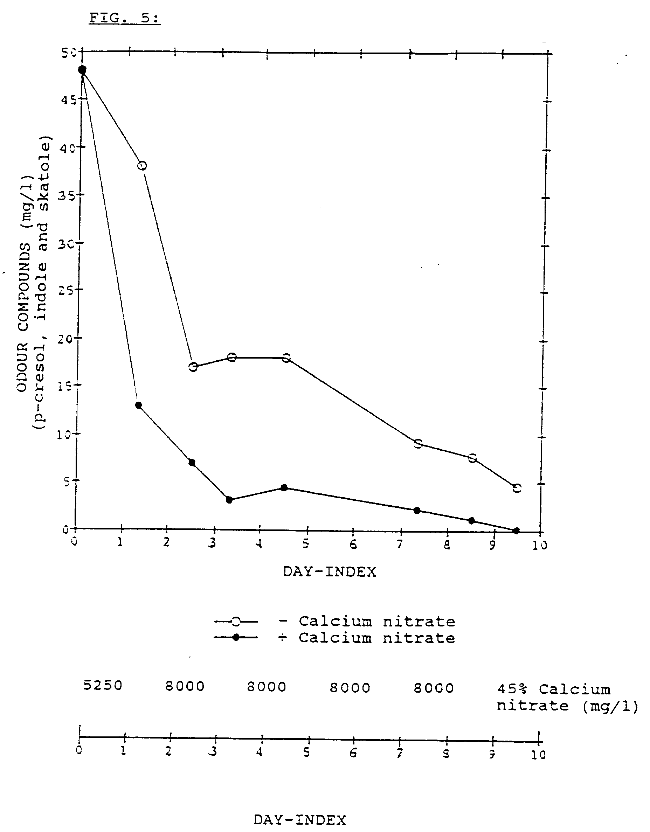

An experiment, corresponding to those in example 2 - 4, was performed with addition of 8000 mg 45% calcium nitrate/l every second day. During the experimental period the concentration of p-cresole, indole and skatole was reduced in both treated and untreated manure. However, the reduction in treated manure was 92% compared to 64% for untreated manure during the 4 first days. The reduction was initially fast (< 4 days) and thereafter declining. Total reduction of p-cresole, indole and skatole were 100% for treated manure and 89% for untreated manure. The results from this experiment are shown in Fig. 5.

### Example 6

This example relates to the effect of calcium nitrate addition on C2 to C5 carboxylic acids which are the main constituents of the volatile fatty acids identified in pig manure. Except butanoic acid (0,001 mg/l), these volatile acids have a relatively high odour threshold (ethanoic acid = 1,0 mg/l) compared to for example sulphide (0,0072 mg/l). Ethanoic acid represents about 70% of the total amount of volatile fatty acid.

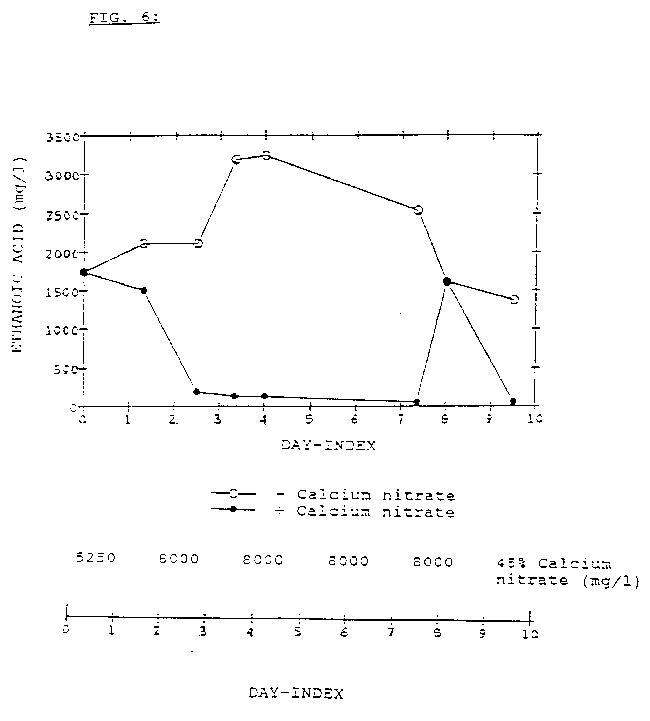

The content of ethanoic acid was reduced in treated manure. This is shown in Fig. 6. Also this experiment was performed under the same conditions as for example 2 - 5.

### Field experiments:

### Example 7

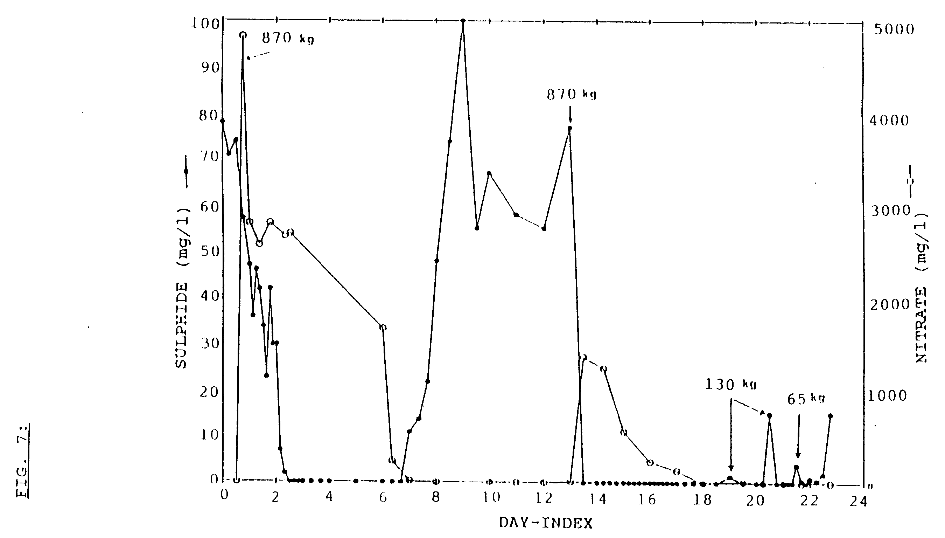

100 m³ of pig manure was treated with calcium nitrate as indicated on Fig. 7. An initial dose ratio of 1 H₂S : 100 45% calcium nitrate solution was sufficient for removal of the sulphide content of the manure in 2 days. This experiment shows further that an initial dose of calcium nitrate lasts for about 3 to 4 days. According to the experience from this experiment an initial dose for pig manure, should average 80 mg/l which is equivalent to 8 kg 45% calcium nitrate solution/m³ and that is a content of 3 kg nitrate/m³ manure.

After the sulphide concentration again had increased to the initial level, a second dose of calcium nitrate reduced the sulphide content to zero in just a few hours.

The results from this field experiment are shown in Fig. 7.

### Example 8

Another field experiment was performed. 100 m³ of pig manure was treated with 77% calcium nitrate in pellet form. First an initial dose of 800 kg was added, and the fourth day it was added a new dose of 800 kg of the same calcium nitrate. The sixth day the manure was spread on the field. Immediately after the spreading, the total odour emission from the manure on the ground was evaluated. The conclusion was unanimous: The odour emission from this manure compared to untreated manure was drasticly reduced.

### Analysis of the total gas production and emission of N₂O and CH₄.

50 ml of headspace gas, which is the gas above the manure in the reactors, from the laboratory experiments was analysed by gaschromatography. The analysis gave the following indications:
It seemed to be a marginal gas production in the reactor containing untreated manure.
No emission of N₂O from untreated manure was detected.
In this analysis the emission of N₂O from treated manure was hardly detectable.
Emitted gas from untreated manure contained approximately 6% (volume) of methane compared to 0,11% for treated manure.
In the reactor with treated manure there was larger gas production than in the reactor with untreated manure. This production seemed to be larger in the initial phase and also larger just after dosing. The initial phase was also the period when it was optimal conditions for denitrification.
Emission of methane was reduced dramatically in the treated manure compared with the untreated manure.

### Analysis of ammonium and emission of gaseous ammonia.

50 ml of headspace gas from the laboratory experiments was bubbled through a solution of 0,1 M HCl. Gaseous ammonia was thereby absorbed as ammonium and determined by Dionex ion chromatography.

There were no differences in the concentration of neither ammonium nor gaseous ammonia between treated and untreated manure. The concentrations did not seem to change during the test period.

Due to the stimulated denitrification process in treated manure, the total gas production in this reactor was larger than in the reactor containing untreated manure. The denitrification process can schematically be written:

(CH₂O)ₙ + NO₃⁻ → CO₂ + N₂ + H₂O.

A larger gas production resulted in a higher loss of gaseous ammonia from treated manure. This is because of the formation of carbon dioxide and gaseous nitrogen. The loss of nitrogen as N-NH₃ is marginal and constitute only < 0,1% of total N-NH₄. However, the loss of N-NH₃ during and after spreading will be lower than for untreated manure. Thus the loss of N-NH₃ will be about the same in the two cases in question.

### Changes in the consistency of the manure after addition of calcium nitrate.

After treating the manure for 3 to 4 days with calcium nitrate, it was observed a greater amount of sludge floating on the top of the liquid phase of the manure in the reactor which had received calcium nitrate than in the reactor with untreated manure. The treated manure also had a more homogenous consistency than untreated manure.

Though all the examples refer to application of the invention on pig manure, it has been found that the same process can be applied on other types of manure. The invention has for instance been tested on manure from cattle, and corresponding results with regard to removal of H₂S and other odour compounds have been registered.

The inventors have by the present invention obtained a simple and economic process for preventing emission of poisonous and unpleasant odours from manure. The chemicals used give a treated manure having at least the same plant nutrient value as untreated manure and still being more acceptable from an agronomical and environmental point of view. The emission of methane from the manure is substantially reduced while the N₂O emission tends to be at the same level as for untreated manure. The optimal amounts of chemicals for obtaining the desired effects can be regulated easily and by simple means like indicator paper. Thus the control of chemicals to run the process properly can be achieved by a minimum of technical instructions.

The method according to the invention is also an advantageous alternative to the wet composting methods as it is more economical and less time and energy consuming besides solving the odour problems related to application of manure.

## Claims

1. Process for reducing hydrogen sulphide and other odour compounds from manure by addition of a nitrate salt,
**characterized**
by adding the nitrate in an amount of 1 - 8 kg nitrate/m³ manure, at least once, and that the latest addition is within 5 days before spreading.

2. Process according to claim 1,
**characterized**
by regulating the addition of nitrate by measuring the NO₃⁻ concentration in the manure, preferably by means of indicator paper.

3. Process according to claim 1,
**characterized**
by multiple addition of nitrate to the manure, the first and second adding being in amounts of 1 - 8 kg nitrate/m³ manure, and subsequently in declining amounts, the last addition of nitrate being performed 1 hour - 5 days before spreading.

4. Process according to claim 1,
**characterized**
by adding 2 - 4 kg nitrate/m³ manure, 1 -5 days before spreading.

5. Process according to claim 1,
**characterized**
by adding the nitrate salt in the form of solid particulated calcium nitrate or aqueous solution thereof.
